# EUROPEAN PATENT SPECIFICATION

(11) **EP 1 869 342 B1**
(45) Date of publication and mention of the grant of the patent: **22.10.2008**
(21) Application number: 06732993.8
(22) Date of filing: 10.04.2006
(51) Int. Cl.: F16H 61/04, F16H 3/12

(54) **DRIVE FOR A VEHICLE, IN PARTICULAR A LORRY**
ANTRIEB FÜR EIN FAHRZEUG, INSBESONDERE EINEN LASTWAGEN
ENTRAINEMENT D'UN VEHICULE, NOTAMMENT D'UN CAMION

(30) Priority: 08.04.2005 NL 1028718; 27.06.2005 NL 1029341
(43) Date of publication of application: 26.12.2007
(73) Proprietor: DTI Group B.V., 5612 AX Eindhoven (NL)
(72) Inventor: VAN DRUTEN, Roëll, Marie, NL-5612 CR Eindhoven (NL); VROEMEN, Bas, Gerard, NL-5615 DB Eindhoven (NL); SERRARENS, Alexander, Franciscus, Anita, 5581 JS Waalre (NL)
(74) Representative: Verhees, Godefridus Josephus Maria
(86) International application number: PCT/NL2006/000186
(87) International publication number: WO 2006/107202

(56) References cited:
- EP-A- 1 262 684
- WO-A-99/15810
- WO-A-20/04098937
- DE-A1-2102004 006 73
- US-A1- 2003 148 847

## Description

### BACKGROUND OF THE INVENTION:

### Field of the invention

The invention relates to a drive for a vehicle, in particular a lorry, comprising a drive source with an outgoing crank shaft, as well as a transmission with a first input that can be connected to the crank shaft and an output that can be connected to the driven wheels of a vehicle, which transmission comprises several gear clutches, as well as several gear wheel transmissions, which can be connected to each other via the gear clutches and to the input and output, which transmission also comprises a further, second input concentric to the first input, and which drive also comprises a first clutch formed by a main clutch, which is present between the crank shaft and the first input of the transmission, a second clutch formed by a further clutch, which is present between the crank shaft and the second input of the transmission, according to the preamble of claim 1.

### Prior art

Such a drive is known from DE 4401812.

In US-A-2003/0148847 the second clutch can connect the second input via a planetary gear to the crank shaft or via the planetary gear and the third clutch to the first input. With this known drive it is possible to achieve at least a number of changes to another transmission ratio with retention of torque transfer between the drive source and the driven wheels.

### Summary of the invention

An objective of the invention is to improve the known device. For this purpose, the drive according to the invention is defined of claim 1. With directly is meant that no further elements are present between the parts to be connected which can interrupt torque transmission between these parts.

An embodiments of the drive according to the invention is characterised in that the further clutch is formed by a synchromesh.

A further embodiment of the drive according to the invention is characterised in that the third clutch is formed by a synchromesh.

Yet a further embodiment of the drive according to the invention is characterised in that the main clutch can connect the crank shaft directly to the first input of the transmission. For this purpose, the drive according to the invention is characterised in that the further clutch can connect the crank shaft directly to the second input. With directly is meant that no further elements are present between the parts to be connected which can interrupt torque transmission between these parts.

An embodiment of the drive according to the invention is **characterised in that** the third clutch can connect the first input directly to the second input of the transmission.

A further embodiment of the drive according to the invention is characterised in that the main clutch can connect the crank shaft directly to the first input of the transmission.

Preferably, the first input is formed by an input shaft and the second input by a gear wheel concentric to the input shaft, which is part of one of the gear wheel transmissions.

An embodiment of the drive according to the invention is characterised in that the drive also comprises a planetary gear with three rotation bodies, of which a first rotation body is connected to the first input of the transmission and via the main clutch to the crank shaft, a second rotation body is connected to the crank shaft and via the further clutch to the second input of the transmission, and a third rotation body can be connected via a clutch or brake to the fixed entities.

Preferably, the first rotation body is formed by an annulus, the second rotation body by a planet carrier, and the third rotation body by a sun wheel.

A further embodiment of the drive according to the invention is **characterised in that** the transmission can be changed between several transmission ratios with the same mutual differences and in that with a third rotation body connected to the fixed entities, the transmission ratio of the planetary gear is such that the planetary gear forms a pre-reduction, which reduces the total transmission of the drive by twice the difference between the successive transmission ratios of the transmission. This allows changes to be made between transmission ratios without interruption of the drive line between drive source and driven wheels.

Preferably, a first and second gear wheel transmission of the gear wheel transmissions of the transmission can be selectively connected by a first of the gear clutches to the first input and to a third, fourth and fifth gear wheel transmission, of which a third gear wheel transmission can be connected by a second gear clutch to an intermediate shaft, and the fourth and fifth gear wheel transmission can be selectively connected by a third gear clutch to the intermediate shaft, which second gear clutch can connect the intermediate shaft to the first gear clutch instead of to the third gear wheel transmission, and which intermediate shaft can be directly connected via a fourth gear clutch to the output or via a further planetary gear that belongs to the transmission, in which the second input is connected to the first gear wheel transmission.

A still further embodiment of the drive according to the invention is characterised in that the second gear clutch can connect the intermediate shaft to a part of the first gear clutch that is connected to the input. In this case the transmission ratio of the third gear wheel transmission is preferably equal to that of the fourth gear wheel transmission in the previous embodiment and that of the fourth gear wheel transmission is preferably equal to that of the third gear wheel transmission of the previous embodiment. This allows more changes to be made between transmission ratios without interruption of the drive line between drive source and driven wheels.

The invention also relates to a method for shifting the drive according to the invention. Regarding this method, the invention is characterised in that when a first transmission ratio of the transmission is changed to a second transmission ratio, the main clutch is slipped so that the torque transfer of the drive source to the output occurs via the further clutch and a path is created in the transmission by putting the gear clutches into a position so that the transmission ratio of the transmission is higher than the second transmission ratio.

Another embodiment of the method according to the invention is characterised in that a change is made between two different paths with equal transmission ratios.

### Brief description of the drawings

The invention will be elucidated more fully below on the basis of drawings in which embodiments of the drive according to the invention are shown. In these drawings:
Figures 1 and 2 show a diagrammatic and constructive representation respectively of the known drive;
Figures 3 and 4 show a diagrammatic and constructive representation respectively of a first embodiment of the drive according to the invention;
Figures 5 and 6 show a diagrammatic and constructive representation respectively of a second embodiment of the drive according to the invention;
Figures 7 and 8 show a diagrammatic and constructive representation respectively of a third embodiment of the drive according to the invention;
Figure 9 shows a simplified representation of a concrete design of the clutch, the planetary gear and the further clutch of the drive shown in figures 7 and 8;
Figure 10 shows a concrete representation of the simplified representation shown in figure 9;
Figure 11 shows a graph of the changes in transmission ratio with the known drive;
Figure 12 shows a schematic representation of the drive according to the invention; and
Figure 13 shows a graph of the changes in transmission ratio with the drive according to the invention.

### Detailed description of the drawings

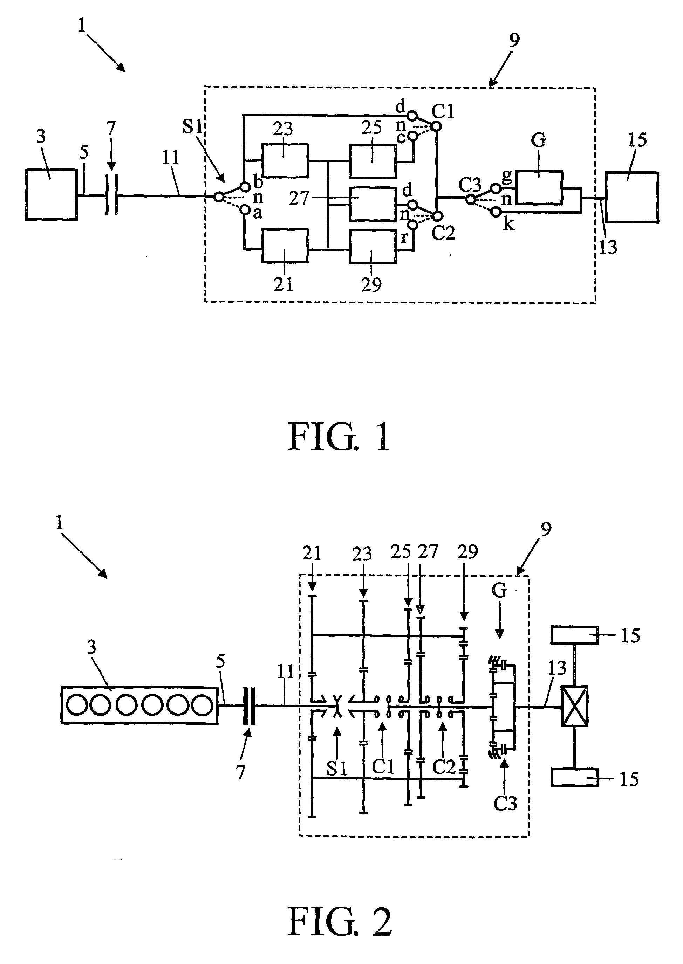

Figures 1 and 2 show a diagrammatic and constructive representation respectively of the known drive. This drive 1 has a drive source 3 with an outgoing crank shaft 5, which can be connected via a first clutch formed by a main clutch 7 to a first input of a transmission 9, which is formed by an input shaft 11. The transmission 9 also has an output, which is formed by an output shaft 13 that can be connected to the driven wheels 15:

The transmission 9 has several gear wheel transmissions 21-29 connected to each other and a planetary gear G. Each gear wheel transmission has a central gear wheel and two gear wheels interlocking with it, which are on two further shafts that are parallel to the central shaft. The transmission 9 also has several gear clutches S1, C1, C2 and C3, which can connect a shaft or gear wheel to one of two further shafts or gear wheels (positions a, b, p, c, d, r, g, k) or to neither (neutral position n). Gear clutch S1 is a synchromesh clutch and gear clutches C1, C2 and C3 are claw clutches.

Putting the gear clutches into different positions can provide 12 different ratios and a reverse ratio.

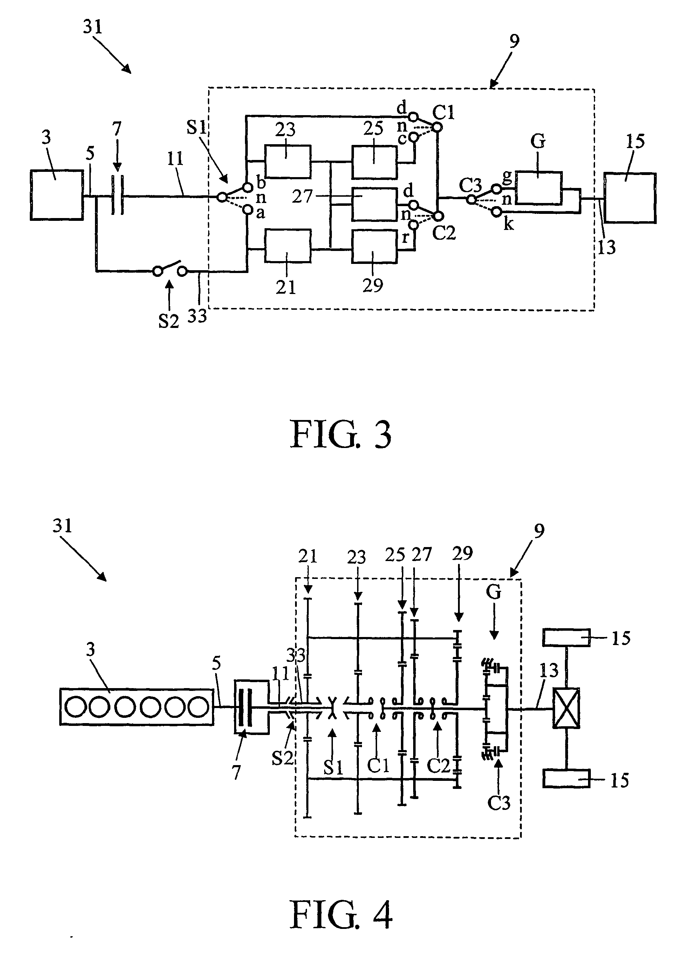

Figures 3 and 4 show a diagrammatic and constructive representation respectively of a first embodiment of the drive according to the invention. In this drive 31, the transmission 9 in addition to the stated first input has a further second input 33, which is formed by a gear wheel concentric to the input shaft 11, which is part of the gear wheel transmission 21. This drive 31 also has a second clutch formed by a further clutch S2, which can directly connect the crank shaft 5 to the second input 33. Further clutch S2 is also a synchromesh clutch. Gear clutch S1 forms a third clutch of the drive.

The main clutch 7 is preferably a wet plate clutch, which when not engaged is closed by a spring. A torsion spring is preferably present between the crank shaft 5 and the main clutch 7. The lamellae of the main clutch 7 act here as a second reduction in addition to the flywheel of the drive source that forms the first reduction so that a Dual Mass Flywheel is present.

The first six transmissions are obtained with gear clutch C3 in position g and the last six transmissions with C3 in position k. The first transmission is obtained by closing the further clutch S2 and putting gear clutch C2 in position d. The other gear clutches are open or in the neutral position. The second transmission is obtained by closing the main clutch, putting gear clutch S1 in position b and gear clutch C2 in position d. The third transmission is obtained by closing S2 and putting C1 in position c. The fourth transmission is obtained by closing the main clutch, putting S1 in position b and C1 in position c. The fifth transmission is obtained by closing S2 and putting C1 in position p. And the sixth transmission is obtained by closing the main clutch, putting S1 in position b and C1 in position p. The seventh to twelfth transmissions are obtained with C3 in position k. The differences between the successive transmissions are all equal.

The further clutch S2 can be used to change from the first to the second transmission, from the third to the fourth transmission, from the fifth to the sixth transmission (C3 in position g) and from the seventh to the eighth, ninth to the tenth and eleventh to the twelfth transmission without interrupting the drive of the drive source to the wheels.

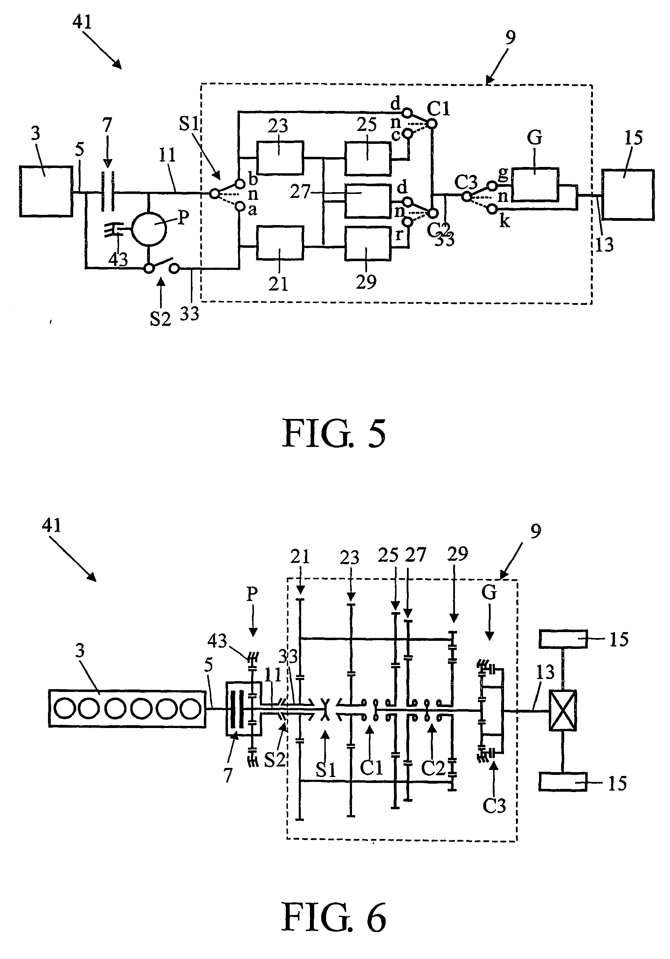

Figures 5 and 6 show a diagrammatic and constructive representation respectively of a second embodiment of the drive according to the invention. This drive 41 also has a planetary gear P between the crank shaft 5 and the input shaft 11. The planetary gear P has three rotation bodies, of which a first rotation body, formed by an annulus, is connected to the first input of the transmission, a second rotation body, formed by a planet carrier, is connected to the crank shaft 5, and a third rotation body, formed by a sun wheel, can be connected via a clutch (synchromesh) or brake 43 to the fixed entities. The brake/clutch 43 is preferably also a wet plate clutch. An extra reduction can be obtained with this planetary gear P which is equal to twice the difference between two successive transmission ratios. This means that with S1 in position b, a zero transmission 0 (=2-2), a further second transmission 2* (=4-2) and a further fourth transmission 4* (=6-2) can be obtained and with S1 in position a, a transmission -1 (=1-2), a further first transmission 1* (=3-2) and a further third transmission 3* (=5-2) are obtained.

The zero transmission is obtained by opening the main clutch and further clutch, putting S1 in position b and C2 in position d (C3 in position g). The further second transmission is obtained by opening the main clutch and further clutch, putting S1 in position b and C1 in position c (C3 in position g).

This means the following transmission changes can be obtained with S1 in position b without interrupting the drive of the drive source to the wheels:
- C1 in position n, C2 closed: 0-1-2,
- C1 in position c, C2 open: 2*-3-4, and
- C1 in position b, C2 open: 4*-5-6.

With S1 in position a, the following transmission changes can be obtained without interrupting the drive of the drive source to the wheels:
- C1 in position n, C2 closed: -1 to 1,
- C1 in position c, C2 open: 1* to 3, and
- C1 in position b, C2 open: 3* to 5.

The following gear changes can be obtained if a change is made between a gear over the planetary gear P (marked with an *) and an equal gear without intervention of the planetary gear P:
0-1-2-2*-3-4-4*-5-6 (ditto for C3 in position k),
-1 -1-2-2*-3-4-4*-5-6 (ditto for C3 in position k),
-1 -1-1*-3-3*-5-6 (ditto for C3 in position k), and
-1 -1-2-2*-3-3*-5-6 (ditto for C3 in position k).

### Example:

Changing from transmission 2 to 2* is possible by opening the main clutch and C2 and reducing the rpm of both further shafts via the brake/clutch 43, after which C1 in position c can be selected synchronously. The engine rpm remains the same in this gear change, so that this gear change can be made quickly and comfortably. Inversely from 2* to 2 is also possible by opening brake/clutch 43 and C1 and increasing the rpm of both further shafts via the main clutch, after which C2 can be selected synchronously.

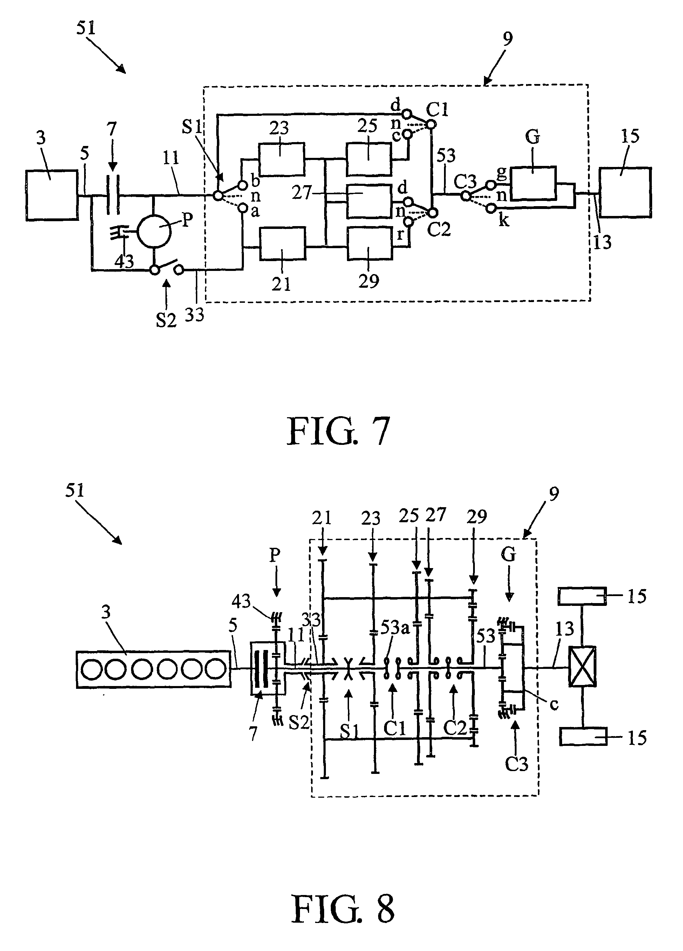

Figures 7 and 8 show a diagrammatic and constructive representation respectively of a third embodiment of the drive according to the invention. The transmission is internally altered in this drive 51. The second gear clutch C1 can connect the intermediate shaft 53 to a part of the first gear clutch S1 connected to the input shaft 11. Moreover, the transmission ratio of the third gear wheel transmission is equal to that of the fourth gear wheel transmission in the previous embodiment and that of the fourth gear wheel transmission is equal to that of the third gear wheel transmission of the previous embodiment.

It is here possible to change 2*-3-4*-5-6 without interruption of the drive (five transmissions in a row).

### Example 1:

From transmission 2* to 3 (via 4) by closing the main clutch, opening the brake/clutch 43 and closing the main clutch further until S2 is synchronous and can be closed. The main clutch can then open again. S1 then goes to position n and C1 to position p.

### Example 2:

From transmission 3 to 4* (via 6) by closing the main clutch, opening S2 and closing the main clutch further until brake/clutch 43 is synchronous and can be closed. The main clutch can then open again. C2 then goes to position n and S1 to position b.

### Example 3:

From transmission 4* to 5 (via 6) by closing the main clutch, opening brake/clutch 43 and closing the main clutch further until S2 is synchronous and can be closed. The main clutch can then open again.

### Example 4:

From transmission 5 to 6 (via 6) by closing the main clutch, opening S2 and closing the main clutch further until the main clutch is closed. S1 can then go to position n.

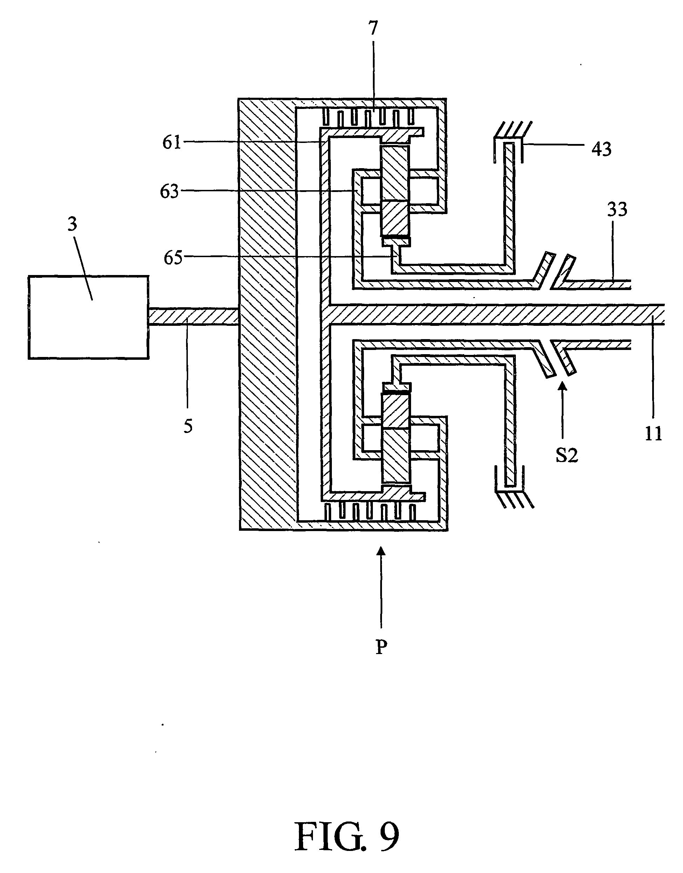

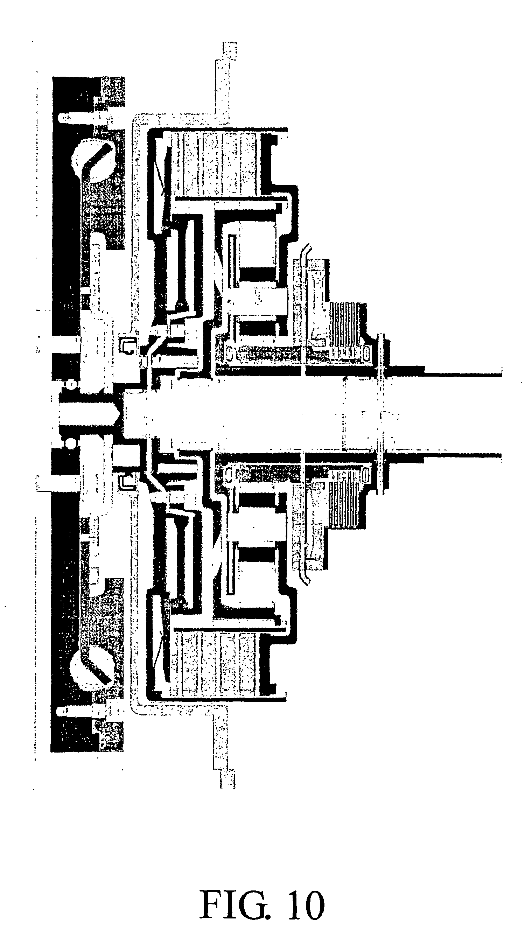

Figures 9 and 10 show a concrete design of the clutch 7, the planetary gear P and the further clutch S2 of the drive shown in figures 7 and 8 in simplified and concrete representation respectively. The planetary gear P has three rotation bodies, of which a first rotation body, formed by an annulus 61, is connected to the first input 11 of the transmission, a second rotation body, formed by a planet carrier 63, is connected to the crank shaft 5, and a third rotation body, formed by a sun wheel 65, can be connected via a clutch (synchromesh) or brake 43 to the fixed entities. The planet carrier 63 carries several planet wheel pairs.

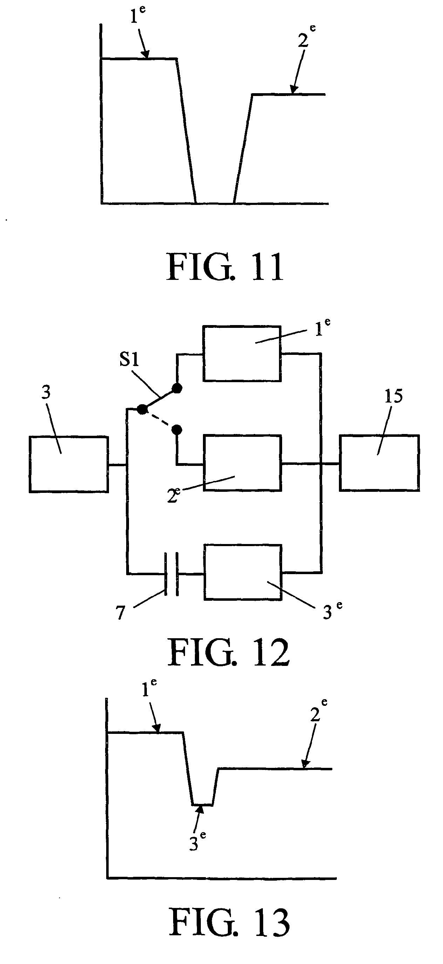

In the known drive the change from a first to a second transmission is made by opening the main clutch 7, see figure 11. In the drive according to the invention, when the transmission ratio is changed, the drive occurs via a third transmission, see figure 12, with a slipped main clutch 7, see figure 13.

Although in the above the invention is explained on the basis of the drawings, it should be noted that the invention is in no way limited to the embodiments shown in the drawings. The invention also extends to all embodiments deviating from the embodiments shown in the drawings within the context defined by the claims.

## Claims

1. Drive (31, 41) for a vehicle, in particular a lorry, comprising a drive source (3) with an outgoing crank shaft (5), as well as a transmission (9) with a first input (11) that can be connected to the crank shaft and an output (13) that can be connected to the driven wheels (15) of a vehicle, which transmission (9) comprises several gear clutches (S1,C1,C2,C3), as well as several gearwheel transmissions (21-29), which can be connected to each other via the gear clutches and to the input and output, which transmission (9) also comprises a further, second input (33) concentric to the first input, whereby the first input is formed by an input shaft and the second input (33) is formed by a gear wheel concentric to the input shaft, which gear wheel is part of one of the gear wheel transmissions (21-29) and which drive also comprises a first clutch formed by a main clutch (7), which is present between the crank shaft (5) and the first input (11) of the transmission, a second clutch formed by a further clutch (S2), which is resent between the crank shaft (5) and the second input (33) of the transmission, wherein the further clutch (S2) can connect the crank shaft (5) directly to the second input (33) **characterized in that** a third clutch (S1) formed by one of the gear clutches (S1,C1,C2,C3) is present between the first and second inputs (11, 33) of the transmission, and the third clutch (S1) can connect the first input (11) directly to the second input (33) of the transmission.

2. Drive (31, 41) according to claim 1, **characterised in that** the further clutch (S2) is formed by a synchromesh.

3. Drive (31, 41) according to claim 1 or 2, **characterised in that** the third clutch (S1) is formed by a synchromesh.

4. Drive (31, 41) according to claim 1, 2 or 3, **characterised in that** the main clutch (7) can connect the crank shaft (5) directly to the first input (11) of the transmission.

5. Drive (41) according to claim 1, 2, 3 or 4, **characterised in that** the drive also comprises a planetary gear (P) with three rotation bodies (61, 63, 65), of which a first rotation body (61) is connected to the first input (11) of the transmission and via the main clutch (7) to the crank shaft (5), a second rotation body (63) is connected to the crank shaft (5) and via the further clutch (S2) to the second input (33) of the transmission, and a third rotation body (65) can be connected via a clutch or brake to the fixed entities (43).

6. Drive (41) according to claim 5, **characterised in that** the first rotation body (61) is formed by an annulus, the second rotation body (63) by a planet carrier, and the third rotation body (65) by a sun wheel.

7. Drive (41) according to claim 5 or 6, **characterised in that** the transmission (9) can be changed between several transmission ratios with equal mutual differences and **in that** with a third rotation body (65), which is connected to the fixed entities (43), the transmission ratio of the planetary gear (P) is such that the planetary gear forms a pre-reduction, which reduces the total transmission of the drive by twice the difference between the successive transmission ratios of the transmission.

8. Drive according (31, 41) to one of the preceding claims, **characterised in that** a first and second gear wheel transmission (21, 23) of the gear wheel transmissions of the transmission can be selectively connected by a first of the gear clutches (S1) to the first input (11) and to a third, fourth and fifth gear wheel transmission (25, 27, 29), of which a third gear wheel transmission (25) can be connected by a second gear clutch (C1) to an intermediate shaft (53), and the fourth and fifth gear wheel transmission (27, 29) can be selectively connected by a third gear clutch (C2) to the intermediate shaft (53), which second gear clutch (C1) can connect the intermediate shaft to the first gear clutch (S1) instead of to the third gear wheel transmission (25), and which intermediate shaft (53) can be directly connected via a fourth gear clutch (C3) to the output (13) or via a further planetary gear (G) that belongs to the transmission, in which the second input (33) is connected to the first gear wheel transmission (21).

9. Drive (31, 41) according to claim 8, **characterised in that** the second gear clutch (C1) can connect the intermediate shaft (53) to a part of the first gear clutch (S1) connected to the first input (11).

10. Method for shifting the drive (9) according to one of the preceding claims, **characterised in that** when a first transmission ratio of the transmission is changed to a second transmission ratio, the main clutch (7) is slipped so that the torque transfer of the drive source (3) to the output (13) occurs via the further clutch (S2) and a path is created in the transmission by putting the gear clutches (S1, C1, C2, C3) into a position so that the transmission ratio of the transmission is higher than the second transmission ratio.

11. Method for shifting the drive (9) according to one of the preceding claims 1 to 9, **characterised in that** a change can be made between two different paths with equal transmission ratios.

## Patentansprüche

1. Antrieb (31, 41) für ein Fahrzeug, insbesondere einen Lkw, der eine Antriebsquelle (3) mit einer Abtriebswelle (5) sowie ein Getriebe (9) mit einem ersten Getriebeeingang (11) umfasst, der mit der Antriebswelle gekoppelt werden kann, sowie einen Getriebeausgang (13), der mit den Antriebsrädern (15) eines Fahrzeugs gekoppelt werden kann, wobei das Getriebe (9) mehrere Kupplungen (S1, C1, C2, C3) sowie mehrere Getriebestufen (21 - 29) umfasst, welche über die Kupplungen miteinander und mit dem Getriebeeingang und dem Getriebeausgang gekoppelt werden können, und wobei das Getriebe (9) ferner einen weiteren, zweiten Getriebeeingang (33) umfasst, der konzentrisch zu dem ersten Getriebeeingang angeordnet ist, wobei der erste Getriebeeingang durch eine Eingangswelle und der zweite Getriebeeingang (33) durch ein Zahnrad gebildet wird, das konzentrisch zu der Eingangswelle angeordnet und Teil einer der Getriebestufen (21 - 29) ist, und wobei der Antrieb ferner eine erste Kupplung umfasst, die durch eine zwischen der Abtriebswelle (5) und dem ersten Getriebeeingang (11) angeordnete Hauptkupplung (7) gebildet wird, sowie eine zweite Kupplung, die durch eine zwischen der Abtriebswelle (5) und dem zweiten Getriebeeingang (33) angeordnete zweite Kupplung (S2) gebildet wird, wobei die Abtriebswelle (5) und der zweite Getriebeeingang (33) über die weitere Kupplung (S2) direkt miteinander verbunden werden können, und eine dritte Kupplung (S1), die durch eine der Kupplungen (S1, C1, C2, C3) gebildet wird und zwischen dem ersten und dem zweiten Getriebeeingang (11,33) angeordnet ist und eine direkte Verbindung zwischen dem ersten Getriebeeingang (11) und dem zweiten Getriebeeingang (33) ermöglicht.

2. Antrieb (31, 41) gemäß Anspruch 1, **dadurch gekennzeichnet, dass** die weitere Kupplung (S2) als Synchronkupplung ausgeführt ist.

3. Antrieb (31, 41) gemäß einem der Ansprüche 1 oder 2, **dadurch gekennzeichnet, dass** die dritte Kupplung (S1) als Synchronkupplung ausgeführt ist.

4. Antrieb (31, 41) gemäß einem der Ansprüche 1, 2 oder 3, **dadurch gekennzeichnet, dass** die Abtriebswelle (5) und der erste Getriebeeingang (11) über die Hauptkupplung (7) direkt miteinander verbunden werden können.

5. Antrieb (41) gemäß einem der Ansprüche 1, 2, 3 oder 4, **dadurch gekennzeichnet, dass** der Antrieb ferner ein Planetengetriebe (P) mit drei Drehkörpern (61, 63, 65) umfasst, von denen ein erster Drehkörper (61) mit dem ersten Getriebeeingang (11) und, über die Hauptkupplung (7), mit der Abtriebswelle (5) verbunden ist, ein zweiter Drehkörper (63) mit der Abtriebswelle (5) und, über die weitere Kupplung (S2) mit dem zweiten Getriebeeingang (33) verbunden ist, und ein dritter Drehkörper (65) über eine Kupplung oder Bremse mit einem festen Punkt (43) gekoppelt werden kann.

6. Antrieb (41) gemäß Anspruch 5, **dadurch gekennzeichnet, dass** der erste Drehkörper (61) als Hohlrad, der zweite Drehkörper (63) als Planetenradträger und der dritte Drehkörper (65) als Sonnenrad ausgebildet ist.

7. Antrieb (41) gemäß einem der Ansprüche 5 oder 6, **dadurch gekennzeichnet, dass** das Getriebe (9) zwischen mehreren, in gleichen Abständen zueinander abgestuften Getriebegängen geschaltet werden kann und, wenn ein dritter Drehkörper (65) mit dem festen Punkt gekoppelt ist, das Planetengetriebe (P) ein Übersetzungsverhältnis aufweist, mit dem das Planetengetriebe als Vorgelege fungiert, in dem das Gesamtübersetzungsverhältnis des Antriebs um das Zweifache der Differenz zwischen den aufeinander folgenden Stufen des Getriebes reduziert wird.

8. Antrieb (31, 41) gemäß einem der vorangegangenen Ansprüche, **dadurch gekennzeichnet, dass** von den Stufen des Getriebes eine erste und eine zweite Getriebestufe (21, 23) wahlweise über eine erste der Kupplungen (S1) mit dem ersten Getriebeeingang (11) gekoppelt werden können und mit einer dritten, vierten und fünften Getriebestufe (25, 27, 29) verbunden sind, von denen eine dritte Getriebestufe (25) über eine zweite Kupplung (C1) mit einer Zwischenwelle (53) gekoppelt werden kann und die vierte und fünfte Getriebestufe (27, 29) wahlweise über eine dritte Kupplung (C2) mit der Zwischenwelle (53) gekoppelt werden können, wobei die Zwischenwelle von der zweiten Kupplung (C1) statt mit der dritten Getriebestufe (25) mit der ersten Kupplung (S1) gekoppelt werden kann, während die Zwischenwelle (53) über eine vierte Kupplung (C3) direkt mit dem Getriebeausgang (13) oder über ein zu dem Getriebe gehörendes weiteres Planetengetriebe (G) mit dem Getriebeausgang (13) gekoppelt werden kann, wobei der zweite Getriebeeingang (33) mit der ersten Getriebestufe (21) verbunden ist.

9. Antrieb (31, 41) gemäß Anspruch 8, **dadurch gekennzeichnet, dass** die Zwischenwelle (53) über die zweite Kupplung (C1) mit einem mit dem ersten Getriebeeingang (11) verbundenen Teil der ersten Kupplung (S1) gekoppelt werden kann.

10. Verfahren für das Hoch- und Herunterschalten des Antriebs (9) gemäß einem der vorangegangenen Ansprüche, **dadurch gekennzeichnet, dass** die Hauptkupplung (7) beim Schalten von einer ersten Stufe des Getriebes in eine zweite Getriebestufe mit Schlupf arbeitet, wobei die Übertragung des Drehmoments von der Antriebsquelle (3) auf den Getriebeausgang (13) über die weitere Kupplung (S2) erfolgt und in dem Getriebe ein Strang entsteht, indem die Kupplungen (S1, C1, C2, C3) so betätigt werden, dass das Übersetzungsverhältnis des Getriebes größer ist als die zweite Getriebestufe.

11. Verfahren für das Schalten des Antriebs (9) gemäß einem der vorangegangenen Ansprüche 1 bis 9, **dadurch gekennzeichnet, dass** ein Wechsel zwischen zwei verschiedenen Strängen mit gleichen Übersetzungsverhältnissen erfolgt.

## Revendications

1. Entraînement (31, 41) pour un véhicule, en particulier un poids lourd, comprenant une source motrice (3) ayant un arbre moteur sortant (5), ainsi qu'une transmission (9) ayant une première entrée (11) pouvant être couplée à l'arbre moteur et une sortie (13) pouvant être couplée à des roues à actionner (15) d'un véhicule, laquelle transmission (9) comprend un certain nombre d'embrayages (S1,C1,C2,C3), ainsi qu'un certain nombre de commandes par engrenage (21-29) pouvant être couplées les une aux autres et à l'entrée et à la sortie par l'intermédiaire des embrayages, laquelle transmission (9) comprend en outre une autre, deuxième entrée (33) concentrique à la première entrée, où la première entrée est formée d'un axe entrant et la deuxième entrée (33) est formée d'une roue d'engrenage concentrique à l'axe entrant, laquelle roue d'engrenage fait partie d'une des commandes par engrenage (21-29), et lequel entraînement comprend en outre un premier embrayage formé d'un embrayage principal (7) se trouvant entre l'arbre moteur (5) et la première entrée (11) de la transmission, comprend un deuxième embrayage formé d'un deuxième embrayage (S2) se trouvant entre l'arbre moteur (5) et la deuxième entrée (33) de la transmission, où l'autre embrayage (S2) peut relier en prise directe l'arbre moteur (5) à la deuxième entrée (33), comprend un troisième embrayage (S1) formé de l'un des embrayages (S1,C1,C2,C3) et se trouvant entre la première et la deuxième entrée (11, 33) de la transmission, et le troisième embrayage (S1) pouvant relier en prise directe la première entrée (11) à la deuxième entrée (33) de la transmission.

2. Entraînement (31, 41) selon la revendication 1, **caractérisé en ce que** l'autre embrayage (S2) est formé d'un mécanisme de synchronisation.

3. Entraînement (31, 41) selon la revendication 1 ou 2, **caractérisé en ce que** le troisième embrayage (S1) est formé d'un mécanisme de synchronisation.

4. Entraînement (31, 41) selon la revendication 1, 2 ou 3, **caractérisé en ce que** l'embrayage principal (7) peut relier en prise directe l'arbre moteur (5) à la première entrée (11) de la transmission

5. Entraînement (41) selon la revendication 1, 2, 3 ou 4, **caractérisé en ce que** l'entraînement comprend en outre un système d'engrenage planétaire (P) ayant trois corps tournants (61, 63, 65), dont un premier corps tournant (61) est relié à la première entrée (11) de la transmission et, par l'intermédiaire de l'embrayage principal (7), à l'arbre moteur (5), dont un deuxième corps tournant (63) est relié à l'arbre moteur (5) et, par l'intermédiaire de l'autre embrayage (S2), à la deuxième entrée (33) de la transmission, et dont un troisième corps tournant (65) peut être couplé à la partie fixe (43) par l'intermédiaire d'un embrayage ou d'un frein.

6. Entraînement (41) selon la revendication 5, **caractérisé en ce que** le premier corps tournant (61) est formé d'une roue périphérique, le deuxième corps tournant (63) d'un support planétaire, et le troisième corps tournant (65) d'une roue solaire.

7. Entraînement (41) selon la revendication 5 ou 6, **caractérisé en ce que** la transmission (9) est réglable entre un certain nombre de rapports de réduction ayant des différences mutuelles identiques et **en ce que**, sur un troisième corps tournant (65) couplé à la partie fixe, le rapport de réduction du système d'engrenage planétaire (P) est tel que le système d'engrenage planétaire forme une pré-réduction qui réduit le transfert total de l'entraînement de deux fois la différence entre les rapports de réduction successifs de la transmission.

8. Entraînement (31, 41) selon une des revendications précédentes, **caractérisé en ce que**, des commandes par engrenage de la transmission, une première et deuxième commandes par engrenage (21, 23) au choix peuvent être couplées à la première entrée (11) par un premier des embrayages (S1) et sont reliées à une troisième, quatrième et cinquième commandes par engrenage (25, 27, 29), dont la troisième commande par engrenage (25) peut être couplée à un arbre secondaire (53) par un deuxième embrayage (C1), et dont les quatrième et cinquième commandes par engrenage (27, 29) au choix peuvent être couplées à l'arbre secondaire (53) par un troisième embrayage (C2), lequel deuxième embrayage (C1) peut coupler l'arbre secondaire au premier embrayage (S1) à la place de le coupler à la troisième commande par engrenage (25), et lequel arbre secondaire (53) peut être couplé en prise directe à la sortie (13) par l'intermédiaire d'un quatrième embrayage (C3) ou peut être couplé à la sortie (13) par l'intermédiaire d'un autre système d'engrenage planétaire (G) appartenant à la transmission, où la deuxième entrée (33) est reliée à la première commande par engrenage (21).

9. Entraînement (31, 41) selon la revendication 8, **caractérisé en ce que** le deuxième embrayage (C1) peut coupler l'arbre secondaire (53) à une partie du premier embrayage (S1) reliée à la première entrée (11).

10. Procédé pour enclencher l'entraînement (9) à la vitesse supérieure ou inférieure selon une des revendications précédentes, **caractérisé en ce que**, lors du changement de vitesse depuis un premier rapport de réduction de la transmission vers un deuxième rapport de réduction, l'embrayage principal (7) sera rendu glissant, où le transfert d'embrayage depuis la source motrice (3) vers la sortie (13) a lieu par l'intermédiaire de l'autre embrayage (S2) et par l'intermédiaire d'un chemin dans la transmission créé en plaçant les embrayages (S1,C1,C2,C3) dans un état où le rapport de réduction de la transmission est plus élevé que le deuxième rapport de réduction.

11. Procédé pour enclencher les vitesses de l'entraînement (9) selon une des revendications 1 à 9 précédentes, **caractérisé en ce qu'**on change de vitesse entre deux chemins différents ayant des rapports de réduction identiques.
